# EUROPEAN PATENT APPLICATION

(11) **EP 3 309 692 A1**
(43) Date of publication of application: **18.04.2018**
(21) Application number: 16194085.3
(22) Date of filing: 17.10.2016
(51) Int. Cl.: G06F 17/30

(54) **METHOD FOR ELASTIC GEOGRAPHICAL DATABASE REPLICATION**

(71) Applicant: Huawei Technologies Co., Ltd., Longgang District Shenzhen, Guangdong 518129 (CN)
(72) Inventor: NOZDRIN, Alexander, 80992 Munich (DE); DOMINGUEZ, David, 80992 Munich (DE)
(74) Representative: Kreuz, Georg Maria

(57) **Abstract**

According to an aspect of some embodiments of the present invention there is provided a device of managing replication action, comprising: a database management system (DBMS) interface adapted to receive from one of a plurality of local DBMS servers in a first servers cluster target data for replication and a replication event including an indication of a remote replication management device in a second servers cluster of a plurality of other local DBMS servers; a network interface adapted to establish a connection with the remote replication management device according to the received replication event, forward the target data to the remote replication management device according to the replication event so as to allow the remote replication management device to instruct a creation of a replica of the target data for storage by a remote DBMS server which is a member of the second servers cluster.

## Description

### BACKGROUND

The present invention, in some embodiments thereof, relates to a device of managing replication action and, more specifically, but not exclusively, to an independent database replication management system with dynamic resource allocation.

The replication of databases presents numerous challenges. These challenges become even more complex when the source and target databases are geographically remote, when numerous databases needs to be replicated to numerous targets, and when the replication scales out, meaning a multitude of sources and targets participate in the replication process.

Replication of the load being processed by a database management system (DBMS) may cause a degradation of service to clients seeking to access the DBMS server. Also, volume of replication data may fluctuate dynamically, but DBMS servers are a fixed resource.

One solution to the above limitations is to increase the computing, storage, and networking resources of the DBMS servers, but this involves considerable increase in expenses, and the increased resources may be underutilized when a replication process requires fewer resources.

Some existing DBMS servers may have a replication service separated from the DBMS servers; however these designs have fixed allocation of resources, and do not allow dynamically allocating and de-allocating the replication resources.

### SUMMARY

According to a first aspect of the present invention there is a device of managing replication action, comprising: a database management system (DBMS) interface adapted to receive from one of a plurality of local DBMS servers in a first servers cluster target data for replication and a replication event including an indication of a remote replication management device in a second servers cluster of a plurality of other local DBMS servers; a network interface adapted to establish a connection with the remote replication management device according to the received replication event, forward the target data to the remote replication management device according to the replication event so as to allow the remote replication management device to instruct a creation of a replica of the target data for storage by a remote DBMS server which is a member of the second servers cluster.

Optionally, the target data is included in a compound data structure, the device further comprises a processor, configured to extract the target data from the composite data structure.

Optionally, the compound data structure comprises the target data and metadata operations record.

Optionally, the composite data structure is selected from a group consisting of a self-descriptive data structure, a consolidated data structure and a combined data structure that combines the self-descriptive data structure and the consolidated data structure.

Optionally, the processor is adapted to compress the target data in a plurality of packets, wherein the target data is forwarded by transmitting the plurality of packets over a network.

Optionally, the data forwarding is held over a wide area network.

Optionally, the processor is adapted to register the device in a coordination service that creates an index for allocating the replication management device as a device for managing the creation of the replica of the target data for storage by the remote DBMS server.

According to a second aspect of the present invention there is a device of managing replication actions, comprising: a network interface adapted to receive a replication event for replicating target data, the target data is stored by a remote database management system (DBMS) server of a plurality of local DBMS servers in a first servers cluster, a processor adapted to create a replica of the target data and to instruct a storage of the target data by another DBMS server of a plurality of geographically adjacent (DBMS) servers in a second servers cluster.

According to an aspect of some embodiments of the present invention there is a system of coordinating and managing replication actions, comprising: a network interface adapted to: supervising a workload of a plurality of local replication management devices which are distributed in a plurality of geographically distant areas, each one of the plurality of local replication management devices manages a creation and storage of replicas in each of a plurality of database management system (DBMS) servers of one of a plurality of servers clusters, creating at least one dataset assigning each of the plurality of local replication management devices for storing replicas according to the workload, and providing to the plurality of local replication management devices an access to the at least one dataset so as to allow forwarding target data to suitable local replication management device based on the at least one dataset for creating a replica of the target data.

Optionally, the providing comprises forwarding the at least one dataset to the plurality of local replication management devices.

Optionally, the providing comprises storing the at least one dataset in a storage space accessible to the plurality of local replication management devices.

According to a third aspect of the present invention a method for managing replication action comprises the steps of: receiving from one of a plurality of local DBMS servers in a first servers cluster target data for replication and a replication event including an indication of a remote replication management device in a second servers cluster of a plurality of other local DBMS servers; establishing a connection with the remote replication management device according to the received replication event, forwarding said target data to said remote replication management device according to the replication event so as to allow said remote replication management device to instruct a creation of a replica of said target data for storage by a remote DBMS server which is a member of the second servers cluster.

In a further implementation of the method according to the third aspect, the method includes registering said device in a coordination service that creates an index for allocating the replication management device as a device for managing the creation of the replica of said target data for storage by the remote DBMS server.

According to a fourth aspect of the present invention a method for coordinating a managing replication action, comprises: supervising a workload of a plurality of local replication management devices which are distributed in a plurality of geographically distant areas, each one of said plurality of local replication management devices managing a creation and storage of replicas in each of a plurality of database management system (DBMS) servers of one of a plurality of servers clusters; creating at least one dataset assigning each of said plurality of local replication management devices for storing replicas according to said workload; and providing to said plurality of local replication management devices an access to said at least one dataset so as to allow forwarding target data to suitable local replication management device based on the said at least one dataset for creating a replica of said target data.

In a further implementation of the method according to the fourth aspect the step of providing comprises forwarding said at least one dataset to said plurality of local replication management devices.

According to a fifth aspect of the present invention, a computer-readable storage medium storing program code is provided, the program code comprising instructions that when executed by a processor carry out the method according to the third and fourth aspects and any further implementation thereof.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a flowchart of an exemplary process for replicating databases, according to some embodiments of the present invention;
FIG. 2A is a schematic illustration of an exemplary device for delivering a database to be replicated, according to some embodiments of the present invention;
FIG. 2B is a schematic illustration of an exemplary device for receiving a database to be replicated, according to some embodiments of the present invention;
FIG. 3 is a schematic illustration of an exemplary system for replicating a database, according to some embodiments of the present invention;
FIG. 4 is a sequence diagram of messaging between devices to replicate a database, according to some embodiments of the present invention;
FIG. 5 is a sequence diagram of an exemplary process for registering a Source Manager with a coordinator entity, according to some embodiments of the present invention;
FIG. 6 is a sequence diagram of an exemplary process for registering a source DBMS server with a replication process coordinating entity, according to some embodiments of the present invention; and
FIG. 7 is a flow chart of an exemplary process of assigning a device to a source DBMS server for delivering a database, according to some embodiments of the present invention.

### DETAILED DESCRIPTION

The present invention, in some embodiments thereof, relates to a device of managing replication actions and, more specifically, but not exclusively, to an independent database replication management system with dynamic resource allocation.

The invention, in some embodiments thereof, is a system of devices that dynamically allocates resources to perform database replication for a network of DBMS servers. The term replication, as used herein, refers to local replication and/or geo-replication. When replication services are needed, replication devices are allocated to source and/or target DBMS servers by an administrative entity. The process of replication is as follows: the source DBMS server transfers replication data to a source device, which then transfers the data via a WAN to a target device, which transfers the data to the target DBMS server. The source device may be a device for managing replication action or (source) replication management device and the target device may a remote replication management device. The replication devices perform most of the processing tasks related to replication, including compression, packetizing, delivering the data to multiple targets, WAN transport interface management, error correction, and the like.

As described above, when a configured and enabled source DBMS server processes a client request, a message requesting a replication is sent via a LAN to a managed replication device, referred to herein also as a Source Manager. The messaging related to the requested replication is referred to herein as a replication event. Once the replication event is acknowledged by the Source Manager, the source DBMS server has no further replication processing to perform, and may return to servicing client database requests. A replication event from a client to a Source Manager may comprise a batch of database operations to be performed, for example write, update, remove, and the like, for a variety of objects in the database.

The Source Manager processes the replication event, including batching of multiple replication events into a composite data structure to be delivered over a WAN. The composite data structure may comprise the replication event, the target data, and/or metadata related to the target data. The Source Manager establishes a connection with a managed replication device co-located with the target DBMS server, referred to herein also as a Target Manager. The Source Manager and/or the Target Manager operate WAN interfaces to transfer the composite data structure to the Target Manager. The Target Manager then transfers the data to a target DBMS server.

The Target and/or Source Managers may be dynamically allocated before and/or during each replication process. For example, multiple Source Managers may be allocated to replicate a single database, where each Source Manager is responsible for delivering a segment of the database. Multiple Source Managers delivering in parallel reduce replication latency, and provide redundancy in case of failures.

In another example, multiple Target Managers may be dynamically allocated to a single target DBMS server. The multiple Target Managers may be needed to handle spikes in the replication stream arriving over a WAN interface.

Additional Source and/or Target Managers may be dynamically allocated during a replication process, for example to replace a Source and/or Target Manager experiencing a technical problem.

The Source and/or Target Managers allocated for a replication action may also be dynamically de-allocated either during the replication event, or after the replication event has completed.

The present invention, in some embodiments thereof, offloads a substantial burden of data and communication processing from DBMS servers, thereby allowing more consistent DBMS server quality of service (QoS) to database clients during the replication process, and less latency in database replications. Dynamic allocation and de-allocation of replication resources is a cost saving solution, since it allows the replication computing resources to perform other computing and communications tasks when replication services are not required. Dynamic allocation also allows distributing the processing load according to which resources are currently less loaded, as well as recovering from a server failure by dynamically reassigning tasks. By reducing replication latency, distributed applications experience few delays in accessing the most current data and there are fewer opportunities for conflicts between incompatible database versions.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

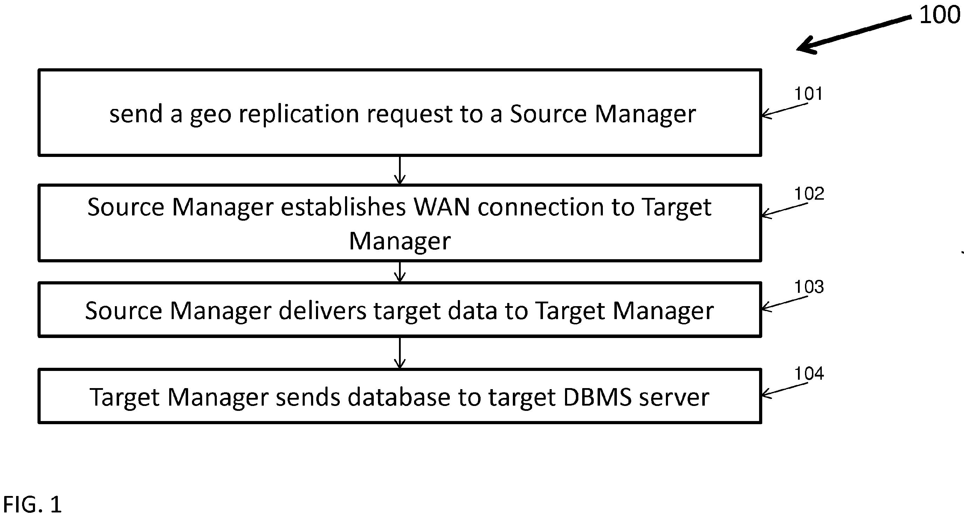

Reference is now made to FIG. 1, a flowchart of an exemplary process for replicating databases, according to some embodiments of the present invention. Replication process 100 may be regarded as a process for managing a replication of at least one database from at least one source DBMS server to at least one target DBMS server. The source DBMS server sends an event to a Source Manager, which then establishes a WAN connection with a Target Manager. The Target Manager receives the data via the WAN, and then sends the data to the target DBMS server.

Optionally, a Source Manager 200 may re-use a WAN connection previously established by a Target Manager.

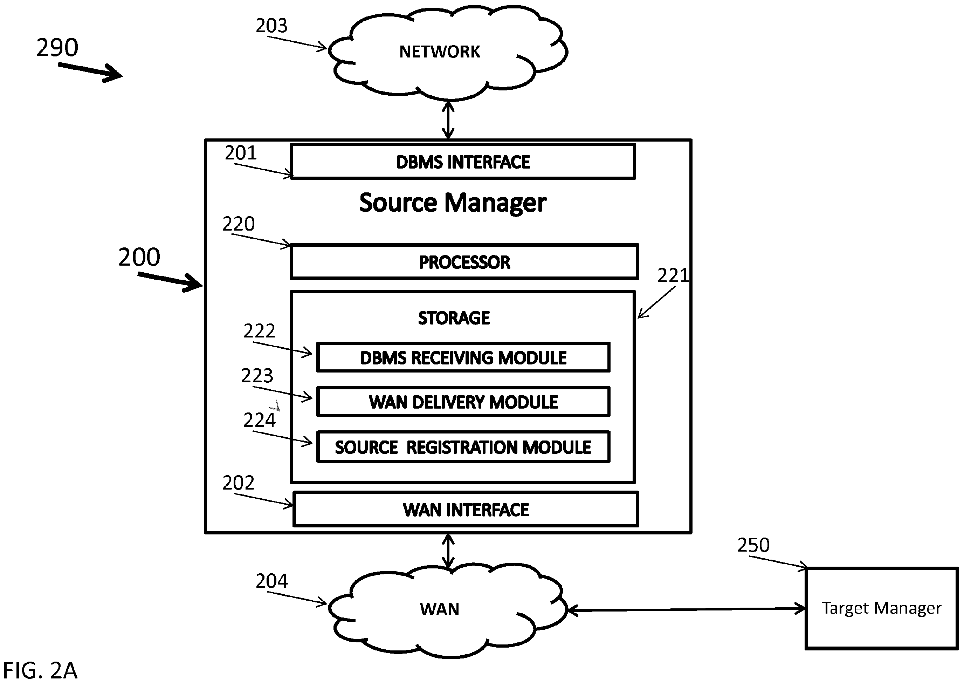

Reference is now made to FIG. 2A, a schematic illustration of an exemplary Source Manager device 200 within an exemplary system 290 for delivering a database to be replicated, according to some embodiments of the present invention.

Source Manager 200 comprises DBMS interface 201, WAN interface 202, processor(s) 220, and storage 221. Optionally, Source Manager 200 may be deployed in the process space of a DBMS.

Storage 221 may include one or more non-transitory storage devices, for example a hard drive, a Flash array, and the like. Storage 221 may comprise one or more software modules, for example WAN delivery module 223, DBMS receiving module 222, and source registration module 224. Wherein a software module refers to a plurality of program instructions stored in a non-transitory medium such as the storage 221 and executed by a processor such as the processor(s) 220.

DBMS interface 201 supports a connection with network 203, and may be controlled by a software module, for example DBMS receiving module 222. DBMS interface 201 may be one of a group of networking devices comprising a network interface controller (NIC), a LAN adapter, a NIC integrated into another component, for example a computer motherboard, and/or any other device for physical interface to a LAN.

Network 203 may be any type of local area network (LAN), for example, an Ethernet LAN, a wireless LAN, and/or any other type of LAN network. Network 203 may employ any type of data networking protocols, including transport control protocol and internet protocol (TCP/IP), user datagram protocol (UDP), and the like.

WAN interface 202 supports connection with WAN 204, and may be any type of WAN interface device, for example a WAN interface card (WIC), a router, or any other device that interfaces a WAN. WAN network 202 may be any type of WAN network, for example a fiber optic network, a cable network, a microwave network, and the like. The WAN may use any WAN protocols, for example Asynchronous Transfer Mode (ATM), Frame Relay, Broadband Ethernet and the like.

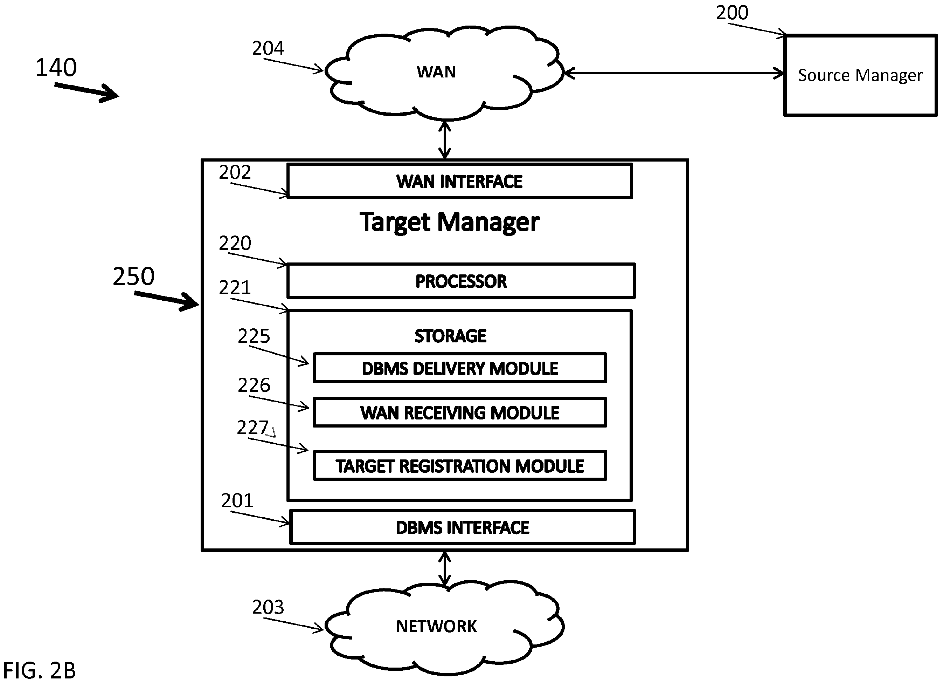

Reference is now made to FIG. 2B, a schematic illustration of an exemplary Target Manager device 250 within exemplary system 140 for receiving a database to be replicated, according to some embodiments of the present invention.

Target Manager 250 comprises DBMS interface 201, WAN interface 202, processor(s) 220, and storage 221. Optionally, Target Manager may be deployed in the process space of a DBMS.

Target Manager 250 may be identical to Source Manager 200, with the exception that storage 221 comprises DBMS deliver module 225, WAN receiving module 226, and target registration module 227 in place of DBMS receiving module 222, WAN delivery module 223, and source registration module 224. Optionally, a single computing platform, for example Source Manager 200, may function as a Target and Source Manager, wherein storage 221 comprises modules from both Source Manager 200 and Target Manager 250.

Reference is now made again to FIG. 1. As shown in 101, replication process 100 starts with a source DBMS server sending a replication event to DBMS interface 201 of Source Manager 200. For example, DBMS receiving module 222 may operate DBMS interface 201 by code instructions. DBMS interface 201 may receive a replication event when those instructions are executed.

The replication event may comprise target data, comprising a database to replicate and/or metadata. The metadata may comprise data relevant to the replication, including a metric of the quantity of data to be replicated, an IP address and/or port number of one or more Target DBMS servers, an IP address and/or port number of one or more Target Managers 250, a WAN QoS level, a time stamp, a time dictating when to perform the replication, and/or any other type of metadata related to a replication.

Optionally, the target data comprises a composite data type, for example an object, a metaobject, an array, a list, a class, an object composition, a record, a union, a compound data type, and/or any other composite data type. Optionally, DBMS receiving module 222 comprises code instructions that when executed extract target data from the composite data structure.

Optionally, the composite data structure is a self-descriptive data structure, a consolidated data structure, and/or a combined data structure that combines self-descriptive and consolidated data structures. The self-descriptive and/or consolidated data structure may be represented by protocols such as Extensible Markup Language (XML), Google Protocol Buffers, Apache Avro, JavaScript Object Notation (JSON), proprietary protocols, and the like.

As shown in 102, Source Manager 200 establishes a connection with Target Manager 250 on WAN 204. For example, WAN interface 202 may be operated by executing code instructions in WAN delivery module 223 to create a connection with a specified Target Manager 250.

Optionally, Source Manager 200 may filter replication events based on rules embedded in metadata to include for delivery only portions that are relevant to the target DBMS server.

Optionally, Source manager 200 may select one or more Target Managers 250 for a replication event based on rules embedded in metadata.

Optionally, Source Manager may perform a plurality of operations to optimize flow, including compression of the target data, batching into a composite data structure, preserving the order of operations within one key hash, optimize all the operations by placing all operations within the same key hash, and the like. The operations may be performed for example by executing code in DBMS receiving module 222. Compression of target data may help reduce transport latency over WAN 204.

As shown in 103, Source Manager 200 delivers target data over WAN 204 to a Target Manager 250, for example by executing code instructions in WAN delivery module 223 to operate WAN interface 202 to deliver the target data to at least one Target Manager 250. Target Manager 250 receives the delivered target data, for example by executing code instruction in WAN receiving module 226 to operate WAN interface 202.

For example, DBMS receiving module 222 may operate DBMS interface 201 by code instructions. The interface receives a replication event when those instructions are executed.

As shown in 104, Target Manager 250 sends the database to a target DBMS server. For example, DBMS delivery module 225 may operate DBMS interface 201 by code instructions. DBMS delivery module 225 may deliver the database received on WAN interface 202 to one or more target DBMS servers located on network 203 when those instructions are executed.

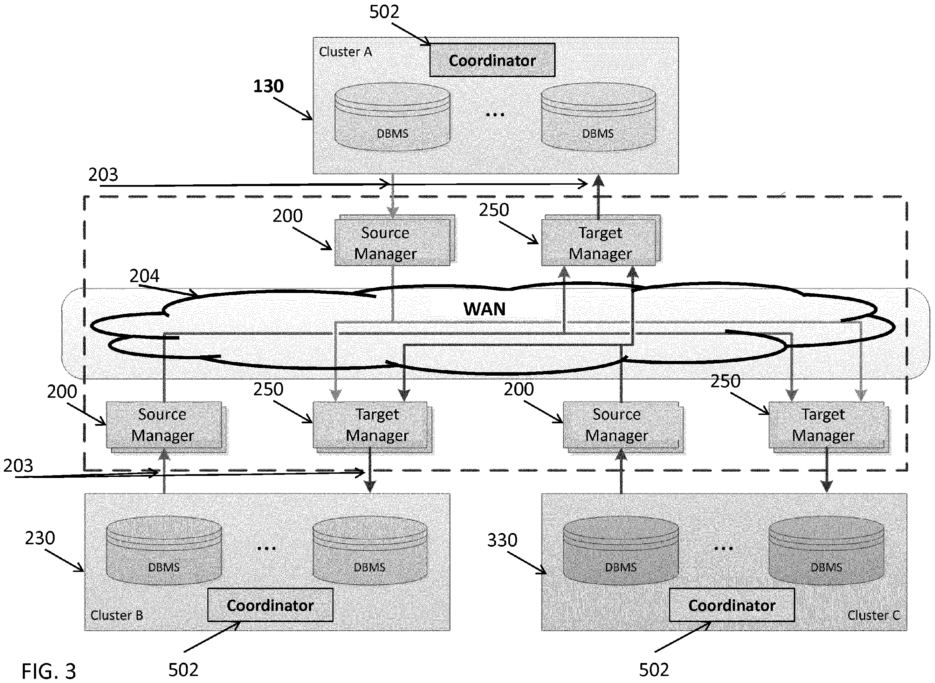

Reference is now made to FIG. 3, a schematic illustration of an exemplary system for replicating a database, according to some embodiments of the present invention. As shown in FIG. 3, optionally cluster A 130, cluster B 230, and cluster C 330 may each comprise a plurality of DBMS servers which may act as a source DBMS server and/or a target DBMS server. For example, every DBMS server in clusters A, B, and/or C may receive replicated data and/or replicate data. Each cluster may be geographically remote from the other clusters.

In another embodiment of this invention, at a given time a cluster may comprise only one or more source DBMS servers, or one or more target DBMS servers. Optionally, a DBMS server may function as a source and/or a target DBMS server.

Each source DBMS server in each cluster may be connected to a Source Manager 200 via a network, for example network 203. Each target DBMS server may be connected to a Target Manager via a network, for example network 203. Source Managers 200 and Target Managers 250 are connected to each other via a WAN, for example WAN 204.

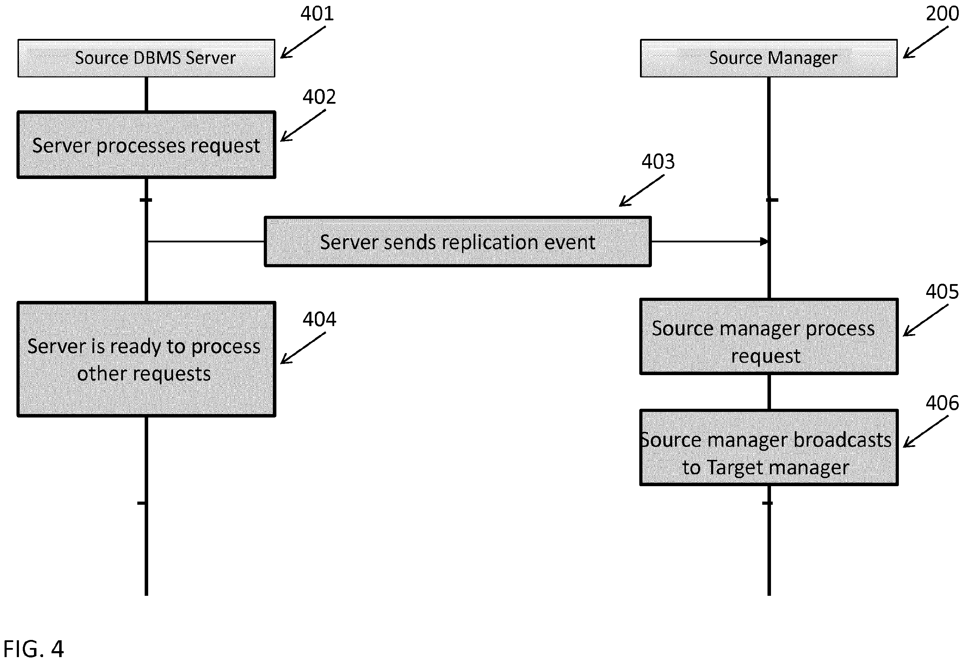

Reference is now made to FIG. 4, a sequence diagram of messaging between devices to replicate a database, according to some embodiments of the present invention.

As shown in FIG. 4, source DBMS server 401 processes a client request 402 comprising broadcasting a replication event 403 to Source Manager 200. After broadcasting the replication event, source DBMS server 401 is ready to handle other client requests.

The replication event may contain metadata, comprising location information for the Target Manager(s). For example, a string may be included in the metadata comprising the transport protocol to be used, and the IP address and port of the Target Manager(s). An example of the string would be "tcp: 10.82.49.59:1000".

Optionally, in order to distribute processing load and reduce transport latency, the source DBMS server may send the replication event to multiple Source Managers 200, specifying in the metadata of each event a portion of the database to be replicated.

As shown in 403, source DBMS server 401 sends a replication event to Source Manager 200.

As shown in 404, after replication event 403 is sent, and optionally acknowledged by Source Manager 200, Source DBMS server 401 has completed processing related to the replication, and is available to process other tasks.

As shown in 405, Source Manager 200 receives and processes replication event 403. As described above in FIG. 1, receiving and processing the replication event comprises executing code in DBMS receiving module 222 to operate DBMS interface 201.

As shown in 406, Source Manager 200 delivers data to a Target Manager, for example Target Manager 250. As described above in FIG. 1, delivering data comprises executing code from WAN delivery module 223 to operate WAN interface 202.

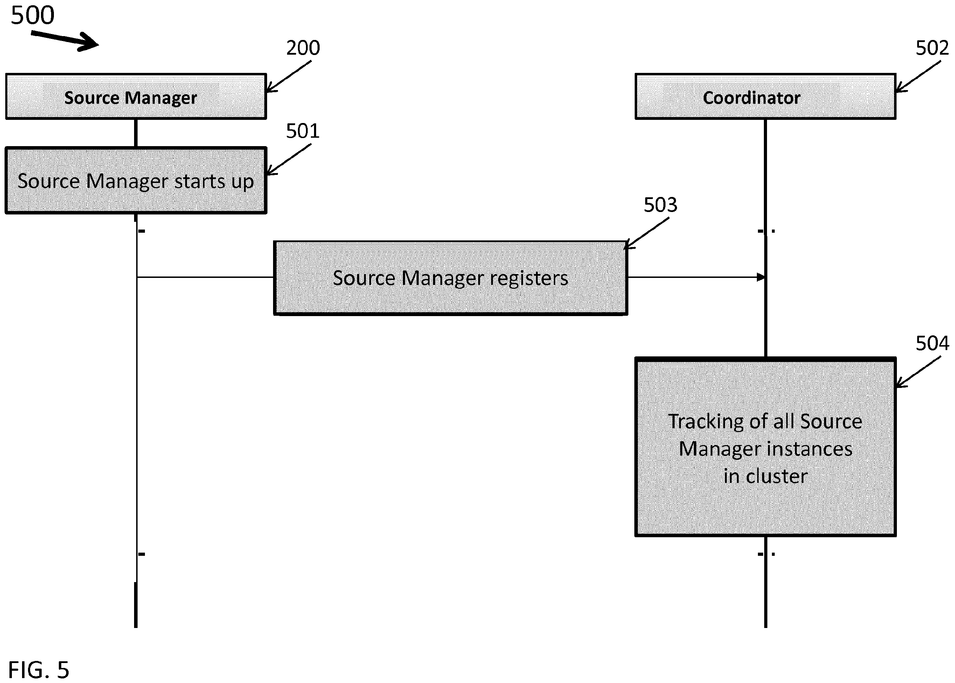

Reference is now made to FIG. 5, a sequence diagram of an exemplary process 500 for registering a Source Manager 200 so that the Source Manager 200 may be allocated to a source DBMS server, according to some embodiments of the present invention.

Process 500 is a process involving a specific Source Manager 200 that must occur before that particular Source Manager 200 can participate in a replication event. Thus, the first step in process 500 is for the Source Manager to register with a Coordinator 502 that tracks available Source and/or Target Managers, and dynamically allocates Source and/or Target Managers to source and/or target DBMS servers.

The coordinating service, referred to herein as Coordinator 502, may be a Source Manager 200, a Target Manager 250, and/or any other computer server comprising processor(s), for example processor(s) 220, a network interface, for example DBMS interface 201, and a storage, for example storage 221 comprising code instructions that when executed registers and allocates Target and/or Source Managers, and records which if any replications the Source and/or Target Managers are currently performing.

As shown in 501, a Source Manager 200 initiates operations, for example as a result of an action by a network administrator. Once active, Source Manager 200 sends registration message 503 to Coordinator 502, for example by executing code instructions in source registration module 224. Optionally, message 503 may be a remote procedure call (RPC). Optionally, all replication event messaging may be RPCs. Optionally, Coordinator 502 replies to message 503 with an acknowledgment message. Coordinator 502 is subsequently ready to allocate Source Manager 200 to a source DBMS server, and Source Manager 200 is subsequently ready to process replication events from a source DBMS server.

Optionally, registration message 503 comprises information on processing load, availability of computing resources, and/or availability of communication resources on Source Manager 200. Source Manager 200 may dynamically send additional messages 503 to Coordinator 502 when there is a change in processing load, computing resources, and/or communication resources. As shown in 504, optionally Coordinator 502 stores records of all registered Source Managers 200, and tracks the processing load, computing resources, and/or communication resources of each Source Manager 200.

Optionally, Source Manager 200 registers with Coordinator 502 using standard DBMS registration procedures.

Optionally, the process for registering a Target Manager 250 with a Coordinator is identical to the process described above for FIG. 5, with the only difference comprising that executing code of target registration module 227 of Target Manager 250 sends message 503 instead of executing code from source registration module 224 of Source Manager 200.

Optionally, Coordinator 502 may provide a WAN-locator to Target Manager 250 that is being registered.

Optionally, Coordinator 502 may store in a storage, for example storage 221, routing rules for WAN 204 for sending replication events from a Source Manager 200 to one or more Target Managers 250. Coordinator 502 may send the routing rules to a Source Manager 200 as part of process 500. Coordinator 502 may update the routing rules and broadcast the updated routing rules to associated source DBMS servers and Source Managers at any time after process 500 has concluded.

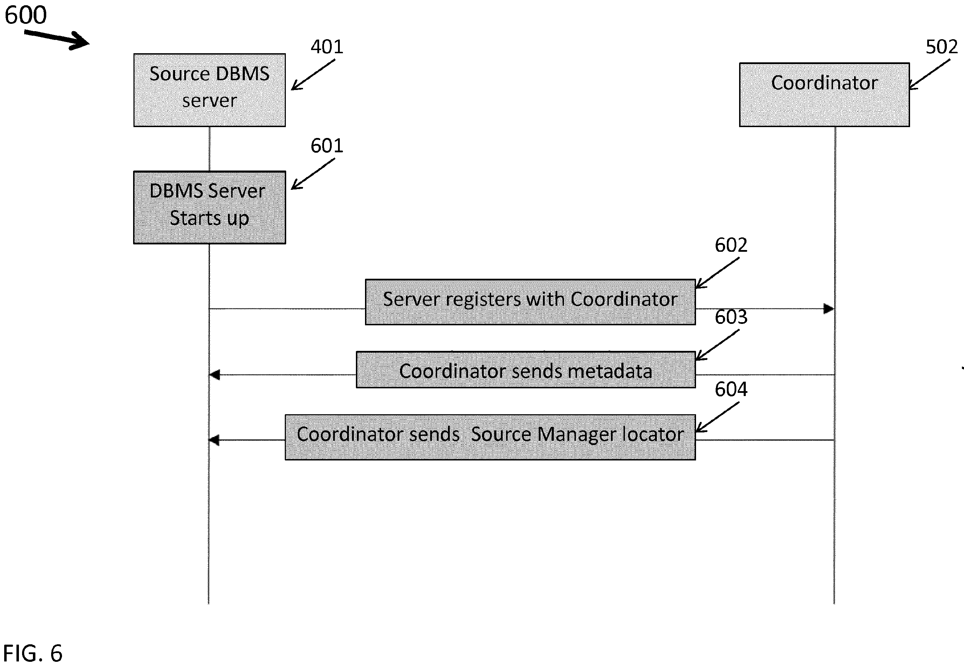

Reference is now made to FIG. 6, a sequence diagram of an exemplary process 600 for registering a Source DBMS server 401 with Coordinator 502, according to some embodiments of the present invention.

Process 600 is a process involving a specific Source DBMS server 401 that must occur before that particular Source DBMS server 401 can request a replication event. A source DBMS server 401 requires an address of a Source Manager 200 in order to request a replication event. Thus, a step in the process is for the source DBMS server 401 to register with a Coordinator 502.

As shown in 601, Source DBMS server 401 initiates operations, for example as a result of an action by a network administrator. Once active, Source DBMS server 401 sends registration message 602 to Coordinator 502. Optionally, message 602 may be a remote procedure call (RPC).

Coordinator 502 replies to message 602 with message 603 comprising metadata. For example, the metadata may contain IP address of all Target Managers 250 that are configured for the replication, and/or configuration of the WAN link which may comprise data compression configuration, a number of operations sent per composite data structure, size of composite data structures, timeout configuration in the event of non-responsive networks, and the like.

As shown in message 604, Coordinator 502 sends a location of a Source Manager, which source DBMS server 401 will utilize to send a replication event 403, as described above in FIG. 4. Source DBMS server 401 is subsequently ready to send replication events to a Source Manager 200.

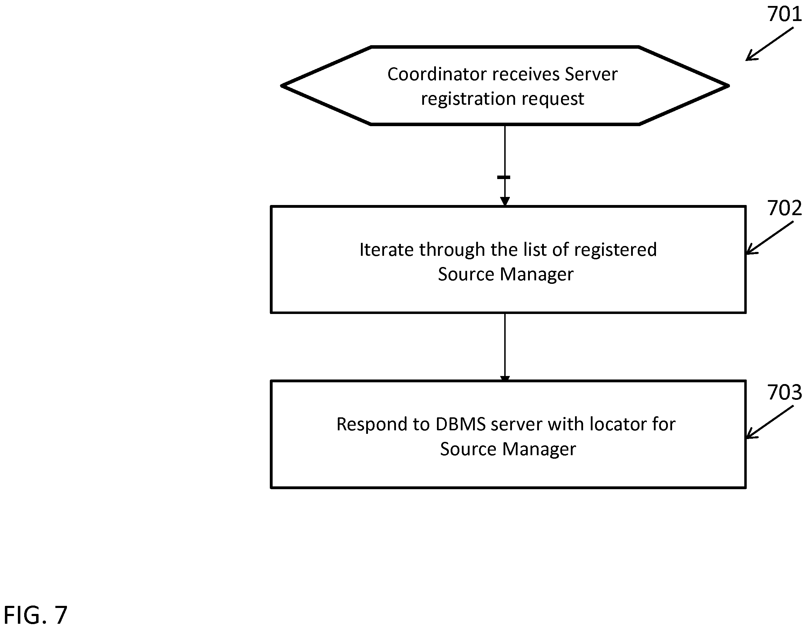

Reference is now made to FIG. 7, a flow chart of an exemplary process for Coordinator 502 to assign a Source Manager 200 to a source DBMS server 401, according to some embodiments of the present invention.

As shown in 701, Coordinator 502 receives message 602 from source DBMS server 401. As shown in 702, Coordinator 502 performs a search among registered Source Managers 200 to locate the Source Manager 200 that has the most available computing and/or communication resources.

Optionally, Coordinator 502 assigns a counter indicating the number of source DBMS Servers assigned to each Source Manager 200. Optionally, Coordinator 502 assigns a counter indicating the number of replications that each Source Manager 200 is performing. Coordinator 401 may allocate the Source Manager 200 with the lowest counter value and/or combination of counter values

Optionally, a Source Manager to be allocated may be chosen according to other criteria and/or combinations of criteria, for example according to access to WAN resources, number of processors and/or processing ability of processors, collocation or lack of collocation with other software processes, available CPU cycles, unused storage resources, and/or any other criteria.

As shown in 703, Coordinator 502 sends messages 603 and 604 to source DBMS server 401.

Optionally, Target Manager 250 is configured as a client database application which receives configuration parameters from Coordinator 502. For example, the configuration parameters may comprise a partition function. In some embodiments of the present invention, the partition function is a hash function on a primary key of database objects.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant servers will be developed and the scope of the term server is intended to include all such new technologies a priori.

As used herein the term "about" refers to ± 10 %.

The terms "comprises", "comprising", "includes", "including", "having" and their conjugates mean "including but not limited to". This term encompasses the terms "consisting of'' and "consisting essentially of'.

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals there between.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

## Claims

1. A device of managing replication action, comprising:
a database management system (DBMS) interface adapted to receive from one of a plurality of local DBMS servers in a first servers cluster target data for replication and a replication event including an indication of a remote replication management device in a second servers cluster of a plurality of other local DBMS servers;
a network interface adapted to:
establish a connection with the remote replication management device according to the received replication event,
forward said target data to said remote replication management device according to the replication event so as to allow said remote replication management device to instruct a creation of a replica of said target data for storage by a remote DBMS server which is a member of the second servers cluster.

2. The device of claim 1, wherein the target data is included in a composite data structure; said device further comprises a processor, configured to extract the target data from said composite data structure.

3. The device of claim 1, wherein said composite data structure comprises said target data and metadata operations record.

4. The device of any one of claims 2 and 3, wherein the composite data structure is selected from a group comprising a self-descriptive data structure, a consolidated data structure, and a combined data structure that combines the self-descriptive data structure and the consolidated data structure.

5. The device of the proceeding claims, wherein said processor is adapted to compress said target data in a plurality of packets; wherein said target data is forwarded by transmitting said plurality of packets over a network.

6. The device of any one of claims 1 to 5, wherein said forward is held over a wide area network.

7. The device of any one of the proceeding claims, wherein said processor is adapted to register said device in a coordination service that creates an index for allocating the replication management device as a device for managing the creation of the replica of said target data for storage by the remote DBMS server.

8. A system of coordinating a managing replication action, comprising:
a network interface adapted to:
supervising a workload of a plurality of local replication management devices which are distributed in a plurality of geographically distant areas, each one of said plurality of local replication management devices manages a creation and storage of replicas in each of a plurality of database management system (DBMS) servers of one of a plurality of servers clusters,
creating at least one dataset assigning each of said plurality of local replication management devices for storing replicas according to said workload; and
providing to said plurality of local replication management devices an access to said at least one dataset so as to allow forwarding target data to suitable local replication management device based on the said at least one dataset for creating a replica of said target data.

9. The system of claim 8, wherein said providing comprises forwarding said at least one dataset to said plurality of local replication management devices.

10. The system of claim 8, wherein said providing comprises storing said at least one dataset in a storage space accessible to said plurality of local replication management devices.

11. A method for managing replication action, comprising the steps of:
receiving from one of a plurality of local DBMS servers in a first servers cluster target data for replication and a replication event including an indication of a remote replication management device in a second servers cluster of a plurality of other local DBMS servers;
establishing a connection with the remote replication management device according to the received replication event,
forwarding said target data to said remote replication management device according to the replication event so as to allow said remote replication management device to instruct a creation of a replica of said target data for storage by a remote DBMS server which is a member of the second servers cluster.

12. The method of claim 11, further including registering said device in a coordination service that creates an index for allocating the replication management device as a device for managing the creation of the replica of said target data for storage by the remote DBMS server.

13. A method for coordinating a managing replication action, comprising the steps of:
supervising a workload of a plurality of local replication management devices which are distributed in a plurality of geographically distant areas, each one of said plurality of local replication management devices managing a creation and storage of replicas in each of a plurality of database management system (DBMS) servers of one of a plurality of servers clusters,
creating at least one dataset assigning each of said plurality of local replication management devices for storing replicas according to said workload; and
providing to said plurality of local replication management devices an access to said at least one dataset so as to allow forwarding target data to suitable local replication management device based on the said at least one dataset for creating a replica of said target data.

14. The method of claim 13, wherein said providing comprises forwarding said at least one dataset to said plurality of local replication management devices.

15. A computer-readable storage medium storing program code, the program code comprising instructions that when executed by a processor carry out the method of one of claims 11 to 14.
